# NEUE EUROPÄISCHE PATENTSCHRIFT

(11) **EP 0 593 977 B2**
(45) Veröffentlichungstag und Bekanntmachung des Hinweises auf die Entscheidung über den Einspruch: **25.04.2001**
(45) Hinweis auf die Patenterteilung: 13.09.1995
(21) Anmeldenummer: 93116153.3
(22) Anmeldetag: 06.10.1993
(51) Int. Cl.: C09K 3/14, C04B 35/653

(54) **Verfahren zur Herstellung von Schleifkörnern**
Process for the production of abrasive grains
Procédé pour la fabrication de particules abrasifs

(30) Priorität: 19.10.1992 DE 4235134; 05.03.1993 DE 4306965
(43) Veröffentlichungstag der Anmeldung: 27.04.1994
(73) Patentinhaber: KORUND LAUFENBURG GmbH, 79725 Laufenburg (DE)
(72) Erfinder: Möltgen, Paul, Dr., D-79725 Laufenburg (DE); Lütte, Martin, D-79730 Murg (DE); Glaisner, Karlheinz, Ing., D-79713 Bad Säckingen (DE); Siebold, Herbert, Dipl.-Ing., D-79733 Görwihl (DE)
(74) Vertreter: Patentanwälte Westphal, Mussgnug & Partner

(56) Entgegenhaltungen:
- EP-A- 0 011 583
- FR-A- 2 290 266
- US-A- 4 194 887

## Beschreibung

Die vorliegende Erfindung betrifft ein Verfahren zur Herstellung von Schiefkörnern durch Eingießen geschmolzenen Schleifmaterials in die Zwischenräume eines Kühlplattenpaketes aus aneinander vertikal parallel angeordneten Kühlplatten, Erstarren, Abtrennen und Zerkleinern.

Verfahren zur schnellen Abkühlung von geschmolzenen Metalloxiden sind seit langem bekannt: So geschieht dies nach der DE-A 2227642 durch Eingießen des geschmolzenen Materials zwischen Kühlplatten. Aus der DE-C 2414036 ist darüber hinaus ein Verfahren zur kontinuierlichen Herstellung eines oxidischen Schleifmittels mit gesteuerter Kristallgröße bekannt, bei dem die Schmelze des Schleifmittels in Keilkokillen abgegossen wird, wobei mehrere Keilkokillen zellenrad- und kreisförmig zu einer Gießvorrichtung zusammengeschlossen sind. Durch die Keilform der Kokillen wird ein Anbacken des erstarrten Materials verhindert. Sie bedingt aber auch eine unerwünschte Kristallgrößenverteilung. Praktisch ist eine Durchführung des beschriebenen Verfahrens bei konstanten Temperaturen kaum möglich da sich die Vorrichtung während des Betriebes naturgemäß zunehmend aufheizt.

Ein feines und homogenes Kristallitgefüge mit einer einzigen Teilchengrößenverteilung, wie es die Voraussetzung für eine gute Schleifleistung ist, ist nach dem Verfahren der DE-C 2414036 nicht erhältlich.

In der US-A 3993 119 werden ein Verfahren und eine Vorrichtung offenbart, kontinuierlich Metalloxide abzukühlen, wobei das flüssige Metallloxid durch ein Abgußloch in einen schmalen Spalt zwischen vertikal angeordneten Kühlplatten, die in einem Schacht unter dem Abgußloch vorbeigeführt werden, abgegossen wird. Die Platten werden dann außerhalb der Gießposition etwas auseinandergenommen, wobei das noch heiße Material ausgeformt wird. Ein Nachteil dieses Verfahrens ist, daß es mit der beschriebenen Apparatur extrem schwierig ist, einen gleichbleibenden schmalen Spalt zwischen den Platten zu gewährleisten Beim Entleeren der Kokillen ist es nicht zu vermeiden, daß Materialstücke zwischen den Kühlplatten eingeklemmt werden. Dadurch kommt es zu einer Aufweitung des betreffenden Spaltes, wodurch die Abkühlbedingungen verändert werden, so daß ein homogenes feinkristallines Gefüge nicht mehr zu erhalten ist. Bei einem kontinuierlichen Betrieb der in der US-A-3 993 119 beschriebenen Gießvorrichtung läßt sich außerdem ein Aufheizen der Kühlplatten trotz vorgesehener Kühleinrichtung nicht vermeiden Die Qualität des abgegossenen Produktes hängt aber wesentlich von der Temperatur der Kühlplatten ab, so daß in der offenbarten Vorrichtung eine gleichbleibende Qualität nicht garantiert werden kann.

Aus der DE-A 2 264 202 ist weiterhin ein Verfahren zur Herstellung von Schleifkörnern bekannt, wobei das geschmolzene Schleifmaterial zwischen mehrere im Abstand voneinander angeordnete Metall- oder Graphitplatten gegossen und durch Kühlen verfestigt wird. Gleiche Herstellungsbedingungen, betreffend die Verweilzeit des Schleifmaterials, sind bei dieser Anordnung jedoch nicht gewährleistet. Das Entfernen des erstarrten Materials ist darüber hinaus äußerst schwierig und aufwendig.

Aufgabe dieser Erfindung ist die Bereitstellung eines Verfahrens, welches die beschriebenen Nachteile des Standes der Technik nicht aufweist.

Es wurde nun ein Verfahren gefunden, welches diese Anforderungen erfüllt. Es handelt sich dabei um ein Verfahren zur Herstellung von Schleifkörnern durch Eingießen geschmolzenen Schleifmaterials in die Zwischenräume eines Kühlplattenpaketes aus aneinander vertikal parallel angeordneten Kühlplatten, Erstarren, Abtrennen und Zerkleinern, wobei das Eingießen so vorgenommen wird, daß das leere Kühlplattenpaket kontinuierlich unter dem Gießstrahl hindurch und über ein Umsetzrad geführt wird, wobei die Platten einzeln angehoben und dabei entleert und anschließend wieder zu einem Paket zusammengestellt werden. Dieses Verfahren ist Gegenstand dieser Erfindung.

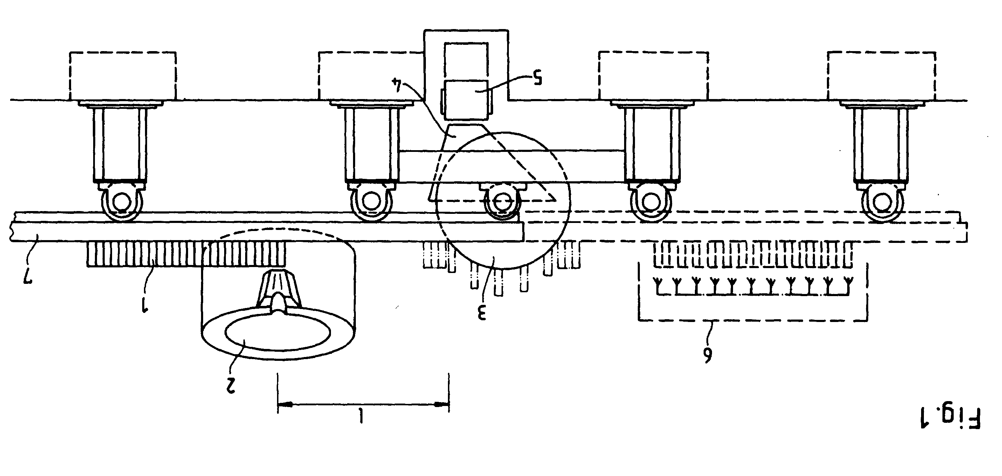

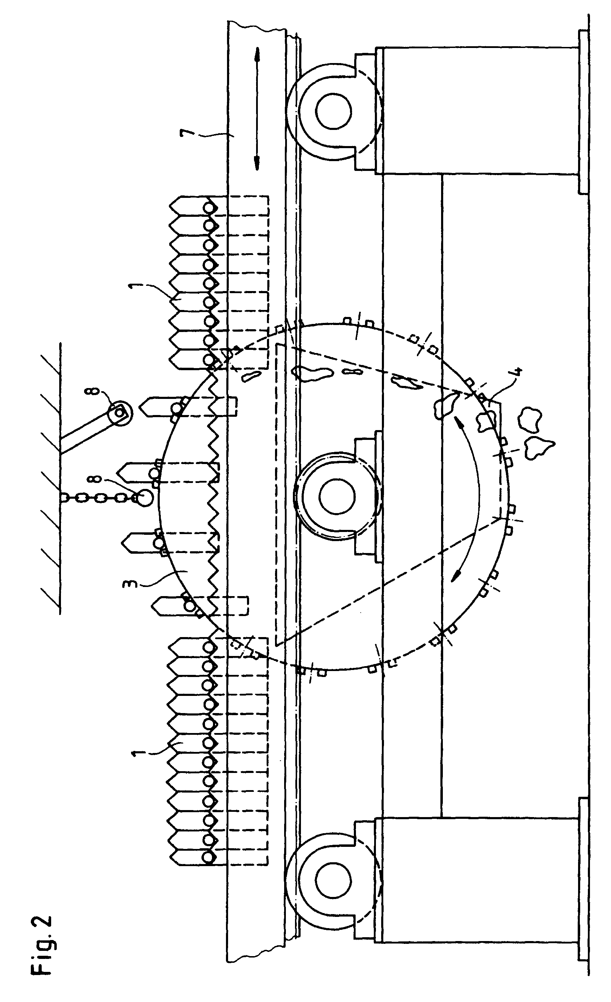

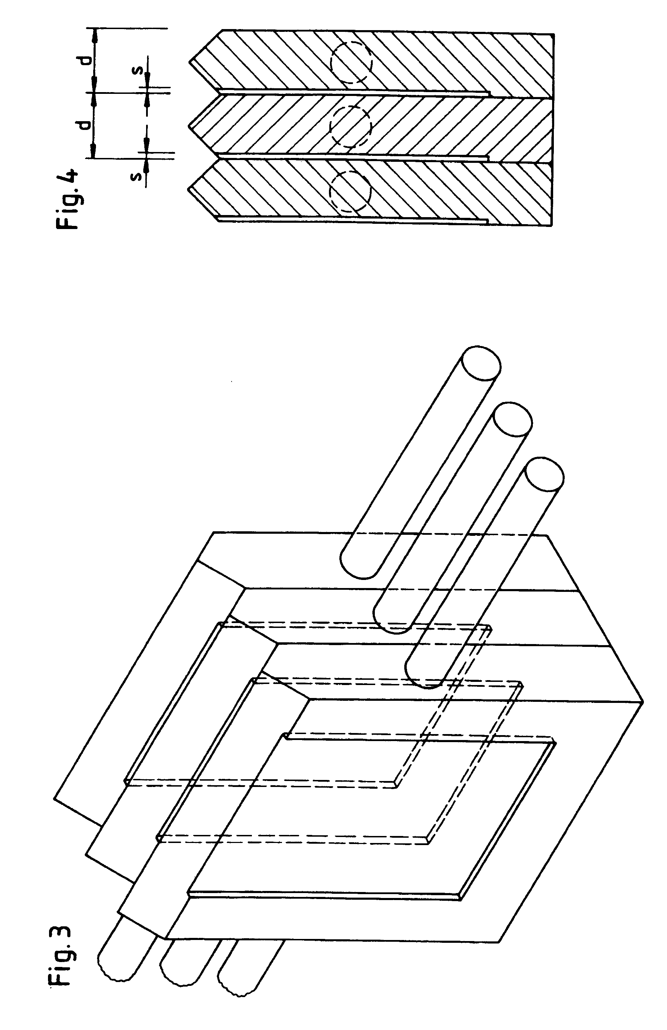

Das erfindungsgemäße Verfahren sowie bevorzugte Ausführungsformen werden im folgenden erläutert, wobei sich die Bezugszahlen auf die schematischen Abbildungen Fig. 1 und Fig. 2 beziehen.

Zur Durchführung des erfindungsgemäßen Verfahrens wird ein Paket (1) von Kühlplatten eingesetzt, die eine Vertiefung aufweisen, so daß ein nach oben hin offener Spalt zwischen den einzelnen Kühlplatten entsteht. Die Dicke der Kühlplatten, die vorzugsweise aus gegossenen Metall, Stahl, Aluminium oder Graphit bestehen, ist so zu wählen, daß ein schnelles Abschrecken der Schmelze gewährleistet ist. Im Falle von aluminiumoxidhaltigen Schleifmaterialien, für deren Herstellung das erfindungsgemäße Verfahren besonders geeignet ist, ist eine Plattendicke von 60 bis 100 mm bei einer Spaltbreite von 3 bis 7 mm ausreichend.

Die Vertiefung in den Kühlplatten, die die Spaltbreite bedingt, kann ein- oder beidseitig an den Kühlplatten vorhanden sein.

Die Anzahl der Kühlplatten ist nicht beschränkt und kann der Ofenkapazität angepaßt werden. Die Größe der Kühlplatten kann ebenfalls in einem gewissen Rahmen variiert werden, wobei es natürlich für eine ökonomische Fahrweise vorteilhalt ist, möglichst große Platten einzusetzen.

Allerdings ist es ab einer bestimmten Plattengröße nur noch schwer oder gar nicht mehr möglich, die Kokillen vollständig zu füllen, da das Material erstat, bevor es den Rand oder den Boden der Kokillen erreichen kann.

Das Kühlplattenpaket wird an der Gießöffnung eines Schmelzofens (2) vorbeigeführt. Dabei wird die flüssige Schmelze kontinuierlich in denjeweiligen Spalt zwischen den Kühlplatten eingegossen. Die Temperatur der Kühlplatten muß so gewählt werden, daß eine möglichst starke Abschreckung des Materials stattfindet, ohne daß die Oxidschmelze so schnell erstarrt, daß die Kokillen nicht mehr vollständig gefüllt werden. Hierzu werden die Kühlplatten vor dem Eingießen in einer Kühlzone (6) auf eine definierte Temperatur, vorzugsweise im Bereich von 100 bis 500°C, gekühlt.

Das Plattenpaket mit den gefüllten Kokillen wird in einem bestimmten Abstand (1) von der Gießstelle über ein Umsetzrad (3) geführt, das die Platten einzeln über einen Trichter hebt, wobei es zur Entleerung des erstarten Produktes aus den Kokillen kommt.

Der Abstand (1) zwischen Gießstelle und Umsetzrad (3) wird so gewählt, daß die Zeit zwischen dem Eingießen und dem Entleeren vorzugsweise 1 bis 3 Minuten beträgt.

Die Verweilzeit zwischen den Kühlplatten sollte so eingerichtet werden, daß die erstarrende Schmelze von der oxidierenden Atmosphäre, wie Luft oder Wasser oder sonstiges, so lange abgeschirmt wird, bis die Temperatur soweit abgesunken ist, daß keine Reaktion mehr mit der oxidierenden Umgebung stattfindet. Dies ist besonders vorteilhaft für die Herstellung von Aluminiumoxid/Zirkoniumoxid-Schleifmitteln, da sich die Anwesenheit von Reduktionsprodukten günstig auf ihre Schleifeigenschaften auswirkt.

Das fertige Produkt wird anschließend, vorzugsweise über ein Förderband (5), zur weiteren Aufbereitungsanlagen gefördert.

Um ein Anhaften des erstarrten Produkts an den Kühlplatten zu verhindern, ist es vorteilhaft, die entleerten Zwischenräume im Bereich vor dem Zusammenstellen mittels Abklopf- und/oder Abstreifvorrichtungen (8) im Bereich des Umsetzrades von anhaltenden Resten des erstarrten Schleifmaterials zu befreien.

Nach dem Passieren dieser Entleerungsstation werden die Kühlplatten wieder zu einem Paket zusammengestellt und in die Kühlzone (6) gefahren. Die Kühlzone besteht vorteilhaft aus mehreren Düsen, die oberhalb des Plattenpaketes angeordnet sind Als Kühlmedium wird vorzugsweise Wasser eingesetzt.

Die Kühlplatten sind, abgesehen von dem Aufenthalt im Bereich des Umsetzrades, auf einer Zahnstange (7) fest positioniert, so daß eine gleichbleibende Kokillenweite garantiert ist.

Der Gießvorgang ist abgeschlossen, wenn die letzte Kokille des Plattenpaketes die Gießöffnung passiert hat. Der Kühlvorgang wird erst eingeleitet, wem das gesamte Plattenpaket in der Kühlzone steht. Dadurch wird garantiert, daß im gesamten Paket innerhalb eines gewissen Toleranzbereiches die gleiche Temperatur vorherrscht. Sobald das Plattenpaket auf die gewünschte Temperatur abgekühlt ist, wird es über das Umsetzrad wieder in die Ausgangsstellung zurückgefahren und der nächste Gießvorgang kann gestartet werden. Die Entleerung erfolgt synchron lediglich zeitversetzt zum Gießvorgang.

Nach dem erfindungsgemäßen Verfahren können sämtliche physikalischen Parameter, die für die Qualität des abgegossenen Metalloxides entscheidend sind, sehr genau eingestellt werden. So ist es möglich, das Metalloxid in einer gleichbleibend dünnen Schicht abzugießen. Hierdurch wird eine extrem schnelle Erstarrung und ein außerordentlich feines Kristallgefüge erreicht, das sich homogen über den gesamten Bereich der erstarrten Schmelze fortsetzt.

Besonders gute Ergebnisse werden nach dem erfindungsgemäßen Verfahren erreicht, wenn das Schleifmaterial Zirkonkorund ist. In Aluminiumoxid/Zirkonoxid-Schleifmitteln kann ein hoher Anteil an tetragonalem Zirkonoxid erhalten werden, was sich erfahrungsgemäß vorteilhaft auf die Schleifleistung des entsprechenden Schleifkorns auswirkt.

Im folgenden wird die Erfindung beispielhaft erläutert, ohne daß hierin eine Einschränkung zu sehen ist.

### Beispiel

Eine Mischung aus 58 % Al₂O₃, 39 % ZrO₂ und 1 % TiO₂ wurde in Anwesenheit von Kohle im elektrischen Lichtbogenofen geschmolzen Die Schmelze wurde mit der erfindungsgemäßen Vorrichtung abgekühlt, wobei die Ausgangstemperatur der Kühlplatten auf ca. 300°C, der Spalt zwischen den Platten auf 4 mm und die Verweilzeit der abgegossenen Schmelze zwischen den Kühlplatten auf ca. 2 Minuten eingestellt war.

Das so erhaltene Schleifmaterial hatte ein homogenes Gefüge mit einer durchschnittlichen Primärkristallitgröße von ca. 0,2 µm. Der Anteil an tetragonaler ZrO₂-Phase lag bei ca. 80 %, bezogen auf den Gesamtanteil an ZrO₂.

Das Material wurde zeikleinert und zu Schleifkörnungen aufbereitet.

Das so erhaltene Schleifkorn wurde in der Absiebung Korn P 36 (FEPA-Norm) in Schleifmitteln auf Unterlagen gegen handelsüblichen Zirkonkorund getestet.

### Test 1:

| | |
|---|---|
| Belastung | 35 N |
| geschliffenes Material | C-45-Stahl (Vollmaterial) |
| Schleifintervall | 5 min |
| Schleifzeit | 60 min |

| Schleifmaterial | Körnung | Abtrag (g) | Leistung (%) |
|---|---|---|---|
| Beispiel | P 36 | 2618 | 107 |
| handelsüblicher Zirkonkorund * | P 36 | 2437 | 100 |

| | | | |
|---|---|---|---|
| * Handelsprodukt der Fa. Norton, USA | | | |

### Test 2:

| | |
|---|---|
| Belastung | 35 N |
| geschliffenes Material | 42 CrMo 4-Stahl |
| Schleifintervall | 2 min |
| Schleifzeit | 30 min |

| Schleifmaterial | Körnung | Abtrag (g) | Leistung (%) |
|---|---|---|---|
| Beispiel | P 36 | 1082 | 118 |
| handelsüblicher Zirkonkorund * | P 36 | 920 | 100 |

| | | | |
|---|---|---|---|
| * Handelsprodukt der Fa. Norton, USA | | | |

## Patentansprüche

1. Verfahren zur Herstellung von Schleifkörnern durch Eingießen geschmolzenen Schleifmaterials in die Zwischenräume eines auf eine definierte Temperatur gekühlten Kühlplattenpaketes aus aneinander vertikal parallel angeordneten Kühlplatten, Erstarren, Abtrennen und Zerkleinern, dadurch gekennzeichnet, daß das Eingießen so vorgenommen wird, daß das leere Kühlplattenpaket kontinuierlich unter dem Gießstrahl hindurch und über ein Umsetzrad geführt wird, wobei die Platten einzeln angehoben und dabei entleert und anschließend wieder zu einem Paket zusammengestellt werden.

2. Verfahren gemäß Anspruch 1, dadurch gekennzeichnet, daß die Kühlplatten vor dem Eingießen in einer Kühlzone auf eine definierte Temperatur, vorzugsweise im Bereich von 100 bis 500°C, gekühlt werden.

3. Verfahren gemaß einem der Ansprüche 1 oder 2, dadurch gekennzeichnet, daß die Zeit zwischen dem Eingießen und dem Entleeren 1 bis 3 Minuten beträgt.

4. Verfahren gemäß einem oder mehreren der Ansprüche 1 bis 3, dadurch gekennzeichnet, daß die entleerten Zwischenräume im Bereich vor dem Zusammenstellen mittels Abklopf- und/oder Abstreifvorrichtungen im Bereich des Umsetzrades von anhaltenden Resten des erstarrten Schleifmaterials befreit werden.

5. Verfahren gemäß einem oder mehreren der Ansprüche 1 bis 4, dadurch gekennzeichnet, daß das Schleifmaterial Zirkonkorund ist.

## Claims

1. A process for the production of abrasive grains by pouring molten abrasive material into the spaces in an assembly of cooling plates cooled to a defined temperature and consisting of cooling plates vertically arranged parallel to one another, solidification, separation and size reduction, characterised in that pouring in is performed in such a way that the empty assembly of cooling plates is passed through continuously beneath the molten stream and over a transfer wheel, the plates being raised individually and at the same time emptied and then put back together to form an assembly.

2. A process according to claim 1, characterised in that, before the molten material is poured in, the cooling plates are cooled to a defined temperature, preferably in the range of from 100 to 500 °C, in a cooling zone.

3. A process according to one of claims 1 or 2, characterised in that the time between pouring in and emptying is 1 to 3 minutes.

4. A process according to one or more of claims 1 to 3, characterised in that the emptied spaces are freed from adhering residues of the solidified abrasive material before reassembly by means of rapping and/or stripping devices in the region of the transfer wheel.

5. A process according to one or more of claims 1 to 4, characterised in that the abrasive material is zirconium corundum.

## Revendications

1. Procédé de production de grains abrasifs par coulée d'abrasif fondu dans les interstices d'un ensemble de plaques de refroidissement refroidi à une température définie, composé de plaques de refroidissement parallèles verticales, solidification, séparation et broyage, caractérisé en ce que la coulée est opérée de telle sorte que l'ensemble de plaques de refroidissement vides est acheminé continûment sous le jet de coulée par l'intermédiaire d'une roue de transposition, les plaques étant soulevées individuellement en étant vidées et réunies ensuite de nouveau en un ensemble.

2. Procédé selon la revendication 1, caractérisé en ce que les plaques de refroidissement; avant la coulée, sont refroidies dans une zone de refroidissement à une température définie, comprise de préférence dans la plage de 100 à 500°C.

3. Procédé selon une des revendications 1 et 2, caractérisé en ce que l'intervalle entre la coulée et le vidage est de 1 à 3 min.

4. Procédé selon une ou plusieurs des revendications 1 à 3, caractérisé en ce que les interstices vidés sont débarrassés des restes adhérants d'abrasif solidifié dans la zone précédant leur réunion, au moyen de dispositifs de martelage et/ou de raclage, dans la zone de la roue de transposition.

5. Procédé selon une ou plusieurs des revendications 1 à 4, caractérisé en ce que l'abrasif est du corindon de zircon.
